Europäisches Patentamt

European Patent Office

Office européen des brevets

(11) Publication number: **0 027 042**
**B1**

(12) **EUROPEAN PATENT SPECIFICATION**

(45) Date of publication of patent specification: **08.01.86**

(21) Application number: **80303494.1**

(22) Date of filing: **03.10.80**

(51) Int. Cl.⁴: **H 04 Q 11/04,** H 04 Q 3/52,
H 04 Q 3/54

(54) **A network connection system.**

(30) Priority: **06.10.79 JP 129136/79**

(43) Date of publication of application:
**15.04.81 Bulletin 81/15**

(45) Publication of the grant of the patent:
**08.01.86 Bulletin 86/02**

(84) Designated Contracting States:
**DE FR GB SE**

(56) References cited:
**FR-A-2 226 797**
**GB-A-1 420 853**
**US-A-3 740 479**

**INTERNATIONAL CONFERENCE ON
COMMUNICATIONS, June 1977, Chicago (US)
KANZAKI "400-Line electronic PABX employing
stored program control and high speed delta
modulation" pages 2.1-17 to 2.1-21.**

(73) Proprietor: **FUJITSU LIMITED
1015, Kamikodanaka Nakahara-ku
Kawasaki-shi Kanagawa 211 (JP)**

(72) Inventor: **Kojima, Takuhito
2-11-1, Chuohrinkan
Yamato-shi Kanagawa, 242 (JP)**
Inventor: **Satake, Yasuo
2-3-9-702, Nijigaoka Tama-ku
Kawasaki-shi Kanagawa, 215 (JP)**
Inventor: **Masuda, Toru
2-7-27, Katase
Fujisawa-shi Kanagawa, 251 (JP)**

(74) Representative: **Bedggood, Guy Stuart et al
Haseltine Lake & Co. Hazlitt House 28
Southampton Buildings Chancery Lane
London WC2A 1AT (GB)**

(56) References cited:
**TELECOMMUNICATIONS & RADIO
ENGINEERING, vol. 29/30, no. 10, October
1975, Washington, US BAKLANOV et al.:
"Equipment complex of the IQE ADCS. Part II"
pages 6-10**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(56) References cited:

INTERNATIONAL SWITCHING SYMPOSIUM, May 1979, Paris, FR TEXIER et al. "TDM Distribution equipment for data links", pages 253 to 259.

INTERNATIONAL SWITCHING SYMPOSIUM May 1979 Paris, FR ENOMOTO et al. "Famille du PBX NEAX 12/22" pages 163-170

IBM TECHNICAL DISCLOSURE BULLETIN, vol. 14, no. 12, May 1972, New York, US CHOUILLET et al. "Programming technique for the service calls in a computer assisted PBX" pages 3835 and 3836

## Description

The present invention relates to a network connection system which is capable of offering special services such as a three way calling service and so forth in an electronic exchange of the time division type.

A variety of special services can easily be offered through utilization of an electronic exchange and, in this case, they can be combined in various ways. But combining of all special services involves an enormous program, and hence is not practicable. Accordingly, it is general practice in the prior art to offer several limited kinds of special services or some limited combinations of special services.

In a conventional electronic exchange having mechanical contacts, release or the like of a subscriber in an intra-office call is supervised at an intra-office trunk circuit and a special service connection can be realized by connecting the subscriber accommodated in the system via the intra-office trunk circuit. In this case, by regarding the intra-office trunk circuit as a combination of an outgoing and an incoming trunk, that is, by processing the intra-office connection as a combination of an outgoing and an incoming connection in terms of a program, the necessity of using a specialized program for the intra-office connection can be eliminated, and consequently the program can be simplified.

In an electronic exchange using a time division system, however, since a DC loop cannot be supervised through a switching network, it is impossible to provide such an intra-office trunk as is used in the electronic exchange having mechanical contacts. Accordingly, the intra-office connection cannot be handled in the same manner as in the electronic exchange provided with the mechanical contacts, and a complicated program is required for offering various special services.

International Switching Symposium, May 1979, Paris, France, pages 253 to 259, Texier et al, discloses a data switching system operable on a time-division basis. The data switching system has a multi-point unit which is a circuit for signal conversion for establishing communication between a primary and a number of secondary stations.

GB—A—1 420 853 discloses an electronic switching system having a switching network, which is not a TDM network and in which subscriber lines and trunk lines are each connected to one side only of the network, to which junctors are connected. One junctor (74) is for providing a transmission path between two local line circuits. A tandem junctor (72) is to provide a transmission path between an incoming and an outgoing trunk circuit. A transfer junctor (62) is for providing transmission capability for calls requiring consultation or conferencing. A special features circuit is provided for PA, conferencing, toll restriction and code calls.

US—A—3 740 479 discloses a junctor for performing the function of time slot changing with a time division multiplex exchange enabling a subscriber allocated to a particular time slot to be connected to a subscriber on any other time slot.

According to the present invention there is provided a network connection system for an electronic exchange of the time division type, the switching network (NW) of the electronic exchange having time switches (TM) and a space switch (S), with trunk lines (T) and subscriber lines, connected to subscribers (SUB, A, B, C, D), each connected to both sides of the network (NW), characterised in that the network connection system comprises a U-junctor (FP, FP1, FP2) connected twice on each side of the network, each connection on one side being linked in the U-junctor to a respective connection on the other side, operable for establishing a connection between two of the said lines, each of which may be either a trunk line or a subscriber line, for special services (e.g. three-way calling and call waiting), in which connection the U-junctor (FP, FP1, FP2) has two appearances thereby to divide the connecton, whereby the respective divided connections can be processed and controlled as an outgoing trunk call and an incoming trunk call respectively using control programs primarily intended for controlling such calls.

The present invention can provide a network connection system which is capable of offering a plurality of special services concurrently in an electronic exchange using time division system.

The present invention can provide a network connection system which is capable of offering such special services, without the need for complicated programs. By using a U-junctor for providing the special services in accordance with the present invention to provide that processing can be effected as for incoming and outgoing calls (incoming and outgoing trunks), programs primarily provided for interconnecting trunk circuits, for example, can be employed to establish the special services.

Reference is made, by way of example to the accompanying drawings, in which:—

Figure 1 is a block diagram illustrating an embodiment of the present invention;

Figs. 2A to 2C, inclusive, are block diagrams respectively showing specific examples of U-junctors for use in the present invention;

Fig. 3 is a block diagram illustrating a specific example of a combination of a U-junctor and a time switch; and

Figs. 4 and 5 are explanatory of a three way calling service and a call waiting service.

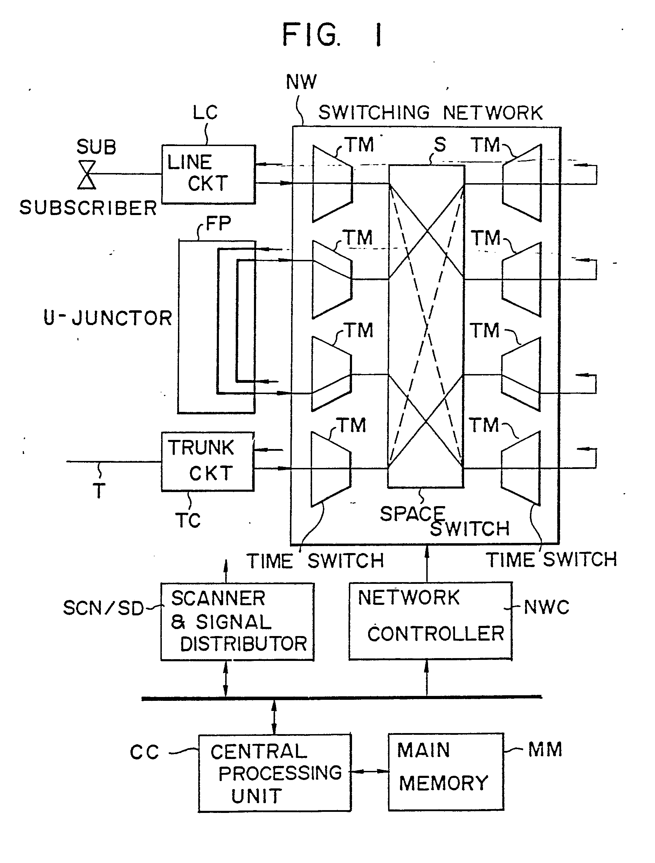

Fig. 1 illustrates in block form an embodiment of the present invention as being applied to a time-division switching system. In Fig. 1, reference character SUB indicates a subscriber; LC designates a line circuit including a codec; NW identifies a switching network; TM denotes time switches for exchanging time slots and performing other functions; S represents a space switch which forms a speech path by operating on the time-division basis; NWC shows a network con-

3

troller for controlling the switching network; T refers to a trunk; TC indicates a trunk circuit; SCN/SD designates a scanner and signal distributor which performs scanning for detecting a status change of each part of the system and distributes various signals to each part for the system; MM identifies a main memory; CC denotes a central processing unit; and FP represents a U-junctor.

The lines from the time switches TM on the right-hand side of the switching network NW are each connected to the line circuit LC, the U-junctor FP or the trunk circuit TC; in Fig. 1, however, there connections are not shown for the sake of simplicity. Since the constructions and control of the time switches TM and the space switch S are similar to those employed in ordinary time-division switching systems, no detailed description will be given thereof.

The subscriber SUB and the trunk circuit TC can be interconnected via routes passing through the U-junctor FP as indicated by the solid lines in the space switch S or via routes indicated by the broken lines. An intra-office connection can be established, for example, by replacing the trunk circuit TC with an intra-office subscriber.

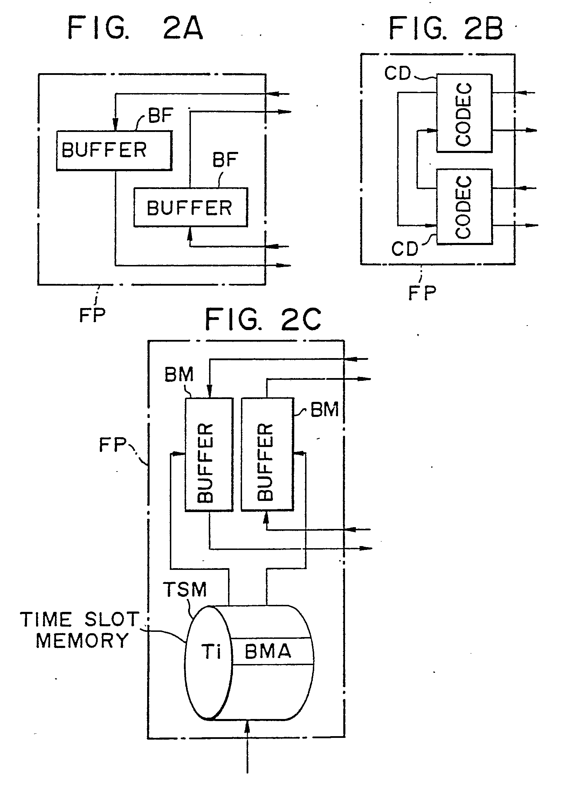

Figs. 2A to 2C illustrate specific examples of U-junctors FP. Fig. 2A shows an arrangement in which buffers BF are each provided for storing one sample of a voice signal. Fig. 2B shows an arrangement in which codecs CD are interconnected via an analog circuit. Fig. 2C shows a time division multiplex arrangement, in which addresses BMA of buffers BM, each corresponding to one time slot Ti, are written in a time slot memory TSM and sequentially read out therefrom by output signals from a time slot counter (not shown) and, in accordance with the addresses BMA, data corresponding to channels are read out in the buffers BM and written therein; accordingly, a plurality of U-junctors can be connected on the time-divided basis.

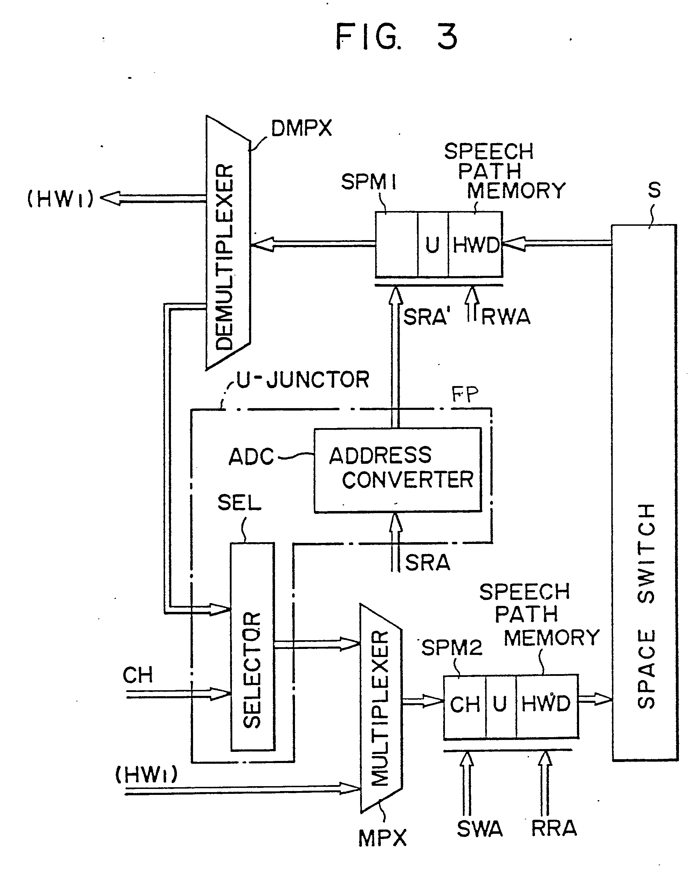

Fig. 3 is a block diagram showing the relationship between the U-junctor and a time switch TM. The time switch TM comprises speech path memories SPM1 and SPM2, a multiplexer MPX and a demultiplexer DMPX, and the U-junctor comprises a selector SEL and an address converter ADC. The selector SEL applies to the multiplexer MPX foldback data from the demultiplexer DMPX for one half of one frame and a digitized voice signal of an ordinary subscriber SUB for the other half of one frame. Since data from a highway $HW_1$ are applied to the multiplexer MPX, channel signal CH for special use such as tone signals, foldover data U and highway data HWD are each written in the speech path memory SPM2 in accordance with a sequential write address SWA and read out following a random read address RRA for input to the space switch S.

Further, data from the space switch S are applied to the speech path memory SPM1 and written therein in accordance with a random write address RWA and read out following an address SRA' converted by the address converter ADC from a sequential read address SRA. The foldover data U is separated by the demultiplexer DMPX and applied to the U-junctor FP, wherein it is written in the speech path memory SPM2, as described previously.

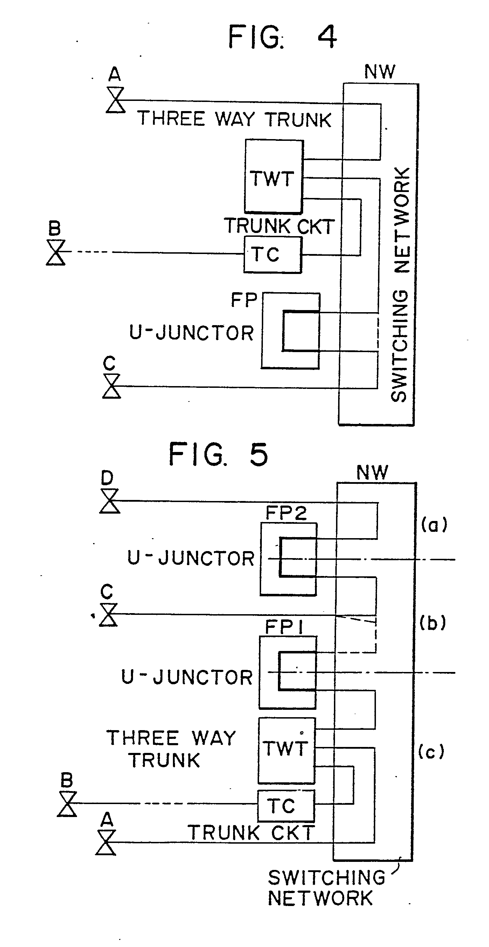

In the case of a three way calling service, subscribers A, B and C are interconnected via a three way trunk TWT, as shown in Fig. 4, in which the subscribers A and C are intra-office subscribers accommodated to the system and the subscriber B is a subscriber of an external office. The subscriber B is connected via the trunk circuit TC to the switching network NW. The line circuits of the subscribers A and C are not shown for convenience of description. The subscriber C is shown to be connected via the U-junctor FP to the three way trunk TWT but it is usually connected directly to the three way trunk TWT from the switching network NW through the path shown by broken-line. When the subscribers A, B and C are thus connected to the three way trunk TWT, mutual communication among them is enabled.

For example, in the case where the subscriber C receives a terminating call from a subscriber D during the three way calling service shown in Fig. 4 and subscriber C is provided with so called call waiting service, the subscriber C is connected via a newly seized or an already seized U-junctor FP1 to the three way trunk TWT, and the broken-line speech path of the switching network NW between the subscriber C and the U-junctor FP1 is temporarily held, thus interconnecting the subscribers C and D via a U-junctor FP2, as shown in Fig. 5. The holding of the speech path in the switching network NW can easily be effected by known methods.

While the subscribers C and D are interconnected, the speech path indicated by the broken line is cut off, so that their talking cannot be heard by the subscribers A and B. When the communication between the subscribers C and D is completed, the three way calling state can be established again by releasing or temporarily holding the speech path between the subscriber C and the U-junctor FP2 and connecting again the speech path between the subscriber C and the U-junctor FP1 which was temporarily held previously. In this case, at a request of the subscriber C, it can be connected again to the subscriber D via the U-junctor FP2, temporarily holding again the speech path between the subscriber C and the U-junctor FP1. In this way, the three way calling service and the calling waiting service can be offered.

When the subscriber A receives a terminating call, for example, from the subscriber D, the three way trunk TWT and the subscriber A are once interconnected via a U-junctor and then the same control as that described above in the case of the terminating call from the subscriber D to the subscriber C is performed.

The abovementioned U-junctors are each controlled, regarding it as a combination of an incoming and an outgoing trunk. For example, in Fig. 5, in the case of the terminating call from the subscriber D to the subscriber C, the subscriber D and the U-junctor FP2 are connected in the part (a) of the switching network NW by a program for controlling the connection between the subscriber C and the outgoing trunk; the U-junctor FP2 and the subscriber C are connected in the part (b) of the switching network NW by a program for call waiting service control between the incoming trunk and the subscriber C; and the U-junctor FP1, the three way trunk TWT, the trunk circuit TC and the subscriber A are interconnected in the part (c) of the switching network NW by a three way calling control program.

As described above, the programs used differ with the services involved but the U-junctors are each controlled, regarding it as an incoming and an outgoing trunk, so that the program for interconnecting an originating and a terminating subscriber via the U-junctor may be programs for interconnecting trunk circuits of the subscriber and the trunk circuit. Further, it is possible to divide all connections into individual basic connections or new services. Accordingly, connections for offering various services can be controlled by relatively simple programs. The foregoing description has been given in connection with the case where the U-junctor is used only when mixing of a plurality of services occurs, but the U-junctor can also be used at all times in disregard of economical considerations.

As has been described in the foregoing, the present invention employs a U-junctor in a switching network of an electronic exchange of the time division system and controls the connection of the switching network, regarding the U-junctor as a combinatioin of outgoing and incoming trunks; accordingly, by using pluralities of three way trunks and U-junctors, the three way calling service for more than three subscribers can also be achieved easily. Also, the call waiting service can readily be performed during the three way calling service, and combinations of other special services can easily be provided through utilization of the U-junctor.

## Claims

1. A network connection system for an electronic exchange of the time division type, the switching network (NW) of the electronic exchange having time switches (TM) and a space switch (S), with trunk lines (T) and subscriber lines, connected to subscribers (SUB, A, B, C, D), each connected to both sides of the network (NW), characterised in that the network connection system comprises a U-junctor (FP, FP1, FP2) connected twice on each side of the network, each connection on one side being linked in the U-junctor to a respective connection on the other side, operable for establishing a connection between two of the said lines, each of which may be either a trunk line or a subscriber line, for special services (e.g. three-way calling and call waiting), in which connection the U-junctor (FP, FP1, FP2) has two appearances thereby to divide the connection, whereby the respective divided connection

tions can be processed and controlled as an outgoing trunk call and an incoming trunk call respectively using control programs primarily intended for controlling such calls.

2. A system as claimed in claim 1, wherein the U-junctor (FP) includes a buffer (BF) having a storage capacity of one time slot.

3. A system as claimed in claim 1, wherein the U-junctor (FP) includes a codec (CD) and an analog circuit.

4. A system as claimed in claim 1, wherein the U-junctor (FP) comprises a buffer (BM) having a storage capacity of a plurality of time slots and a time slot memory (TSM) for controlling addresses of the buffer (BM).

## Revendications

1. Système de connexion de réseau destiné à un central électronique du type division de temps, le réseau de commutation (NW) du central électronique ayant des commutateurs temporels (TM) et un commutateur spatial (S), avec des lignes de jonction (T) et des lignes d'abonné, connectés à des abonnés (SUB, A, B, C, D), chacun étant connecté aux deux côtés du réseau (NW), caractérisé en ce que le système de connexion de réseau comprend un joncteur en U (FP, FP1, FP2) connecté deux fois de chaque côté du réseau, chaque connexion située d'un certain côté étant reliée dans le joncteur en U à une connexion respective située de l'autre côté, ayant pour fonction d'établir une connexion entre deux desdites lignes, chacune desquelles peut être une ligne de jonction ou une ligne d'abonné, en vue de services spéciaux (par exemple communication à trois ou appel en attente), dans laquelle connexion le joncteur en U (FP, FP1, FP2) possède deux aspects de façon à diviser la connexion, si bien que les connexions divisées respectives peuvent être traitées et commandées comme étant respectivement une communication de jonction sortante et une communication de jonction entrante utilisant des programmes de commande principalement destinés à commander ces communications.

2. Système selon la revendication 1, où le joncteur en U (FP) comporte un tampon (BF) possédant une capacité d'emmagasinage correspondant à une tranche de temps.

3. Système selon la revendication 1, où le joncteur en U (FP) comporte un codeur-décodeur (CD) et un circuit analogique.

4. Système selon la revendication 1, où le joncteur en U (FP) comprend un tampon (BM) possédant une capacité d'emmagasinage de plusieurs tranches de temps et une mémoire de tranche de temps (TSM) permettant de commander les adresses du tampon (BM).

## Patentansprüche

1. Koppelfeld-Verbindungssystem für eine elektronische Vermittlungsanlage vom Zeitteilungstyp, bei welchem das Schnaltnetzwerk (NW) der elektronischen Vermittlungsanlage Zeitschalter (TM) und einen Raumschalter (S) hat, mit Fernleitungen (T) und Teilnehmerleitungen, welche mit den Teilnehmern (SUB, A, B, C, D) verbunden sind, die jeweils mit beiden Seiten des Netzwerkes (NW) verbunden sind, dadurch gekennzeichnet, daß das Koppelfeld-Verbindungssystem einen U-Verbindungssatz (FP, FP1, FP2) umfaßt, der auf jeder Seite des Koppelfeldes zweimal angeschlossen ist, wobei jeder Anschluß auf einer Seite in dem U-Verbindungssatz mit einem entsprechenden Anschluß auf der anderen Seite verbunden ist, und der zur Herstellung einer Verbindung zwischen zwei der genannten Leitungen betrieben werden kann, von denen jede entweder eine Fernleitung oder eine Teilnehmerleitung, für besondere Dienste (z. B. Drei-Wege-Gespräche und Anklopfen) ist, bei welcher Verbindung der U-Verbindungssatz (FP, FP1, FP2) dadurch zwei Erscheinungsformen hat, um dadurch die Verbindung zu teilen, wodurch die entsprechend geteilten Verbindungen als ein herausgehender Fernruf bzw. ein ankommender Fernruf verarbeitet und gesteuert werden können, unter Verwendung von Steuerprogrammen, die primär für die Steuerung solcher Rufe vorgesehen sind.

2. System nach Anspruch 1, bei welchem der U-Verbindungssatz (FP) einen Puffer (BF) umfaßt, der eine Speicherkapazität von einem Zeitschlitz aufweist.

3. System nach Anspruch 1, bei welchem der U-Verbindungssatz (FP) einen Coder-Decoder (CD) und eine Analogschaltung umfaßt.

4. System nach Anspruch 1, bei welchem der U-Verbindungssatz (FP) einen Puffer (BM) umfaßt, der eine Speicherkapazität von einer Vielzahl von Zeitschlitzen hat, und einen Zeitschlitzspeicher (TSM) zur Steuerung der Adressen des Puffers (BM).

# FIG. 1

SWITCHING NETWORK

NW

LC

SUB

LINE CKT

SUBSCRIBER

FP

U-JUNCTOR

TRUNK CKT

T

TC

TM  S  TM

TM  TM

TM  TM

TM  TM

SPACE SWITCH

TIME SWITCH  TIME SWITCH

SCANNER & SIGNAL DISTRIBUTOR

SCN/SD

NETWORK CONTROLLER

NWC

CENTRAL PROCESSING UNIT

CC

MAIN MEMORY

MM

# FIG. 2A

# FIG. 2B

# FIG. 2C

# FIG. 3

# FIG. 4

# FIG. 5